# EUROPEAN PATENT APPLICATION

(11) **EP 2 848 674 A1**
(43) Date of publication of application: **18.03.2015**
(21) Application number: 12876207.7
(22) Date of filing: 08.05.2012
(51) Int. Cl.: C09K 11/78

(54) **METAL NANOPARTICLE-COATING TITANATE FLUORESCENT MATERIAL AND PREPARATION METHOD THEREFOR**

(71) Applicant: Ocean's King Lighting Science&Technology Co., Ltd., Guangdong 518054 (CN); Shenzhen Ocean's King Lighting Engineering Co. Ltd, Shenzhen, Guangdong (CN)
(72) Inventor: ZHOU, Mingjie, Shenzhen Guangdong 518054 (CN); WANG, Rong, Shenzhen Guangdong 518054 (CN); CHEN, Guitang, Shenzhen Guangdong 518054 (CN)
(74) Representative: Schrell, Andreas
(86) International application number: PCT/CN2012/075208
(87) International publication number: WO 2013/166664

(57) **Abstract**

Provided in the present invention is a metal nanoparticle-coating titanate fluorescent material, which has a molecular formula of *A_{1-x-y}B_{y}TiO₃:xR@SiO₂@M_{z},* where A is one or two elements selected from Ca, Sr, Ba and Mg, where B is one element selected from Li, Na and K, where R is one or two elements selected from Eu, Gd, Tb, Tm, Sm, Ce, Dy and Mn, where M is one selected from Ag, Au, Pt, Pd and Cu nanoparticles, where 0 < x≤0.40; 0≤y≤0.40, where z is the molar ratio of M and SiO₂, where 0 <*z*≤1×10⁻², where @ represents a coating, where M is a core where SiO₂ is an intermediate layer shell, and where *A_{1-x-y}B_{y}TiO₃:xR* is an outer layer shell. The metal nanoparticle-coating titanate fluorescent material forms a core-shell structure by introducing metal nanoparticles, while the metal nanoparticles generate a Plasmon resonance effect, thus increasing the internal quantum efficiency of the metal nanoparticle-coating titanate fluorescent material, which is provided with increased luminescent intensity. Also provided in the present invention is a preparation method for the metal nanoparticle-coating titanate fluorescent material.

## Description

### TECHNICAL FIELD

The present invention relates to the field of luminescent material, in particular to a metal nanoparticle-coating titanate fluorescent material and preparation method therefor.

### BACKGROUND ART

Currently, most commercial fluorescent materials are prepared by high-temperature solid-phase method, by which the appearance of the resulting fluorescent material is uneven, where repeatedly milling is required to achieve the desired particle size (5 to 10µm), and that the luminescent intensity of the fluorescent material sometimes would be weaken by the defects thus generated and the impurities thus introduced during milling, which renders the luminescent intensity of the fluorescent material low.

Introduction of the concept of the core-shell material for use in inorganic fluorescent materials results in the formation of a spherical, size and morphology-controlled core-shell structured luminescent material. Further, the spherical morphology renders a higher bulk density, which facilitates the screen-coating process and improves the display performance. However, the luminescent intensity of the currently produced core-shell structured fluorescent material is relatively low.

### DISCLOSURE OF THE INVENTION

On this basis, for the low luminescent intensity problem of the core-shell structured fluorescent material currently in use, it is necessary to provide a metal nanoparticle-coating titanate fluorescent material having a higher luminescent intensity, and a preparation method thereof.

A metal nanoparticle-coating titanate fluorescent material having the molecular formula of A_{1-x-y}ByTiO₃:xR@SiO₂@M_{z},
where, A is one or two elements selected from Ca, Sr, Ba and Mg;
B is one element selected from Li, Na and K;
R is one or two elements selected from Eu, Gd, Tb, Tm, Sm, Ce, Dy and Mn;
M is one selected from Ag, Au, Pt, Pd and Cu nanoparticles;
0 < x≤0.40;
0≤y≤0.40;
z is the molar ratio of M and SiO₂, where 0 < z≤1×10⁻²;
@ represents a coating, M is a core, SiO₂ is an intermediate layer shell, and A_{1-x-y}B_{y}TiO₃:xR is an outer layer shell.

In one embodiment, 0.002≤x≤0.2.

In one embodiment, 0.002≤y≤0.2.

In one embodiment, 1 ×10⁻⁵≤ z≤5 × 10⁻³.

A method of preparing a metal nanoparticle-coating titanate fluorescent material, comprising the steps of:
step 1: preparing a colloid containing a metal nanoparticle M, said metal nanoparticle M is one selected from Ag, Au, Pt, Pd and Cu nanoparticles;
step 2: surface processing said colloid containing a metal nanoparticle M, then adding anhydrous ethanol and ammonia, when mixed evenly and while stirring, adding tetraethylorthosilicate on the basis of the molar ratio, z, of the metal nanoparticle M and SiO₂, when reacted acquiring by separation and drying of SiO₂@M_{z} powder, where 0 < z≤1 × 10⁻²;
step 3: acquiring a mixed solution of the salt solutions corresponding to A, B and R by mixing said salt solutions, on the basis of the stoichiometric ratio of A_{1-x-y}B_{y}TiO₃:xR@SiO₂@M_{z}, then adding therein an anhydrous ethanol under stirring to mix, followed by sequentially adding therein citric acid, dropwise of tetrabutyl titanate, polyethylene glycol and said SiO₂@M_{z} powder, adjusting the pH to 1 to 5, stirring to react and give a colloid having the molecular formula of A_{1-x-y}B_{y}TiO₃:xR@SiO₂@M_{z}, where A is one or two elements selected from Ca, Sr, Ba and Mg; B is one element selected from Li, Na and K; R is one or two elements selected from Eu, Gd, Tb, Tm, Sm, Ce, Dy and Mn; 0 < x≤0.40; 0≤y≤0.40; 0 < z≤1×10⁻²;
step 4: drying the colloid having the molecular formula of A_{1-x-y}B_{y}TiO₃:xR@SiO₂@M_{z}, followed by subjecting the same to milling, then calcining at 300 to 600°C, taking the same out for milling, and calcining again at 700 to 1500°C in air or in a reducing atmosphere, cooling to room temperature to obtain a metal nanoparticle-coating titanate fluorescent material having the molecular formula of A_{1-x-y}B_{y}TiO₃:xR@SiO₂@M_{z}.

In one embodiment, said step 1 of preparing a colloid containing a metal nanoparticle M comprises:
mixing a salt solution of a metal nanoparticle M, an auxiliary agent and a reducing agent for a reaction time of 10 min to 45 min to obtain a colloid containing a metal nanoparticle M;
where, the concentration of said salt solution of a metal nanoparticle M is 1×10⁻³ mol/L to 5 ×10⁻²mol/L;
said auxiliary agent is at least one of polyvinylpyrrolidone, sodium citrate, cetyl trimethyl ammonium bromide, sodium lauryl sulfate and sodium dodecyl sulfate;
said auxiliary agent is present in an amount of 1×10⁻⁴g/mL to 5×10⁻²g/mL in said colloid containing a metal nanoparticle M;
said reducing agent is at least one of hydrazine hydrate, ascorbic acid, sodium citrate and sodium borohydride;
the molar ratio of said reducing agent and the metal nanoparticle M in said salt solution of said metal nanoparticle M is 3.6: 1 to 18: 1.

In one embodiment, said step 2 of surface processing said colloid containing a metal nanoparticle M comprises adding said colloid containing a metal nanoparticle into an aqueous solution of polyvinylpyrrolidone while being stirred for 12h to 24h, where the concentration of said aqueous solution of polyvinylpyrrolidone is 0.01 to 0.05 g/ml.

In one embodiment, in said step 3, the ratio of the total volume of said mixed solution of said salt solutions corresponding to A, B and R and the volume of the anhydrous ethanol is 1:1 to 1:10, the ratio of the molar amount of the citric acid and the total molar amount of said A, B and R is 1:1 to 1:8, the concentration of the polyethylene glycol is 0.005 to 1g/ml, the pH of the mixture of said salt solutions corresponding to A, B and R, an anhydrous ethanol, tetrabutyl titanate, polyethylene glycol and SiO₂@M_{z} powder is adjusted to 1 to 5 using a concentrated nitric acid of 65 % to 68% by mass percentage.

In one embodiment, in said step 4, said reducing atmosphere is one of a N₂+ H₂ mixed reducing atmosphere, carbon powder reducing atmosphere and pure H₂ reducing atmosphere.

In one embodiment, in said step 4, drying is conducted at 80 to 150 °C for 1 to 24 h, calcining at 300 to 600 °C is conducted for 2h to 15h, and calcining at 700 to 1500 °Cis conducted for 0.5 h to 8 h.

The above-mentioned metal nanoparticle-coating titanate fluorescent material forms a core-shell structure by introducing Ag, Au, Pt, Pd and Cu metal nanoparticles, which the metal nanoparticles generate a Surface-Plasmon Resonance effect, thus increasing the internal quantum efficiency of the metal nanoparticle-coating titanate fluorescent material, and hence improving the luminescent intensity of the metal nanoparticle-coating titanate fluorescent material. As compared with the existing commercial fluorescent material, there is a 60% increase in the luminescent intensity of the metal nanoparticle-coating titanate fluorescent material of the present invention.

### BRIEF DESCRIPTION OF THE DRAWING

Figure 1 shows a flowchart of the process of preparing the metal nanoparticle-coating titanate fluorescent material of one embodiment.
Figure 2 shows a comparative plot of the luminescent spectrum of the fluorescent material prepared in Example 8 and that of the Sr_{0.98}TiO₃:0.02Tm@SiO₂ fluorescent material, being excited with an electron beam at 3 kV.

### DETAILED DESCRIPTION OF THE EMBODIMENTS

To solve the problem of low luminescent intensity of the existing commercial fluorescent material, a metal nanoparticle-coating titanate fluorescent material having a higher luminescent intensity and the preparation method thereof are provided, which will be described in further details with reference to the following embodiments accompanying the drawings.

A metal nanoparticle-coating titanate fluorescent material having the molecular formula of A_{1-x-y}B_{y}TiO₃:xR@SiO₂@M_{z} of one embodiment,
where, A is one or two elements selected from Ca, Sr, Ba and Mg;
B is one element selected from Li, Na and K;
R is one or two elements selected from Eu, Gd, Tb, Tm, Sm, Ce, Dy and Mn;
M is one selected from Ag, Au, Pt, Pd and Cu nanoparticles;
0 < x≤0.40, preferably 0.002≤x≤0.2;
0≤y≤0.40, preferably 0.002≤y≤0.2;
z is the molar ratio of M and SiO₂, where 0 < z≤1×10⁻², preferably 1×10⁻⁵≤ z≤5×10⁻³;
@ represents a coating, M is a core, SiO₂ is an intermediate layer shell, and A_{1-x-y}B_{y}TiO₃:xR is an outer layer shell.

The metal nanoparticle-coating titanate fluorescent material having the metal nanoparticle M as the core, SiO₂ as the intermediate layer shell, A_{1-x-y}B_{y}TiO₃:xR as the outer layer shell, forms a core-shell structure by introducing Ag, Au, Pt, Pd and Cu metal nanoparticles as the internal core, while the Ag, Au, Pt, Pd and Cu metal nanoparticles generate a Surface-Plasmon Resonance effect, thus increasing the internal quantum efficiency of the metal nanoparticle-coating titanate fluorescent material, and hence improving the luminescent intensity of the metal nanoparticle-coating titanate fluorescent material. As compared with the existing commercial fluorescent material, there is a 60% increase in the luminescent intensity of the metal nanoparticle-coating titanate fluorescent material of the present invention.

Said metal nanoparticle-coating titanate fluorescent material due to its higher luminescent intensity, can be widely used in the field of lighting and displays.

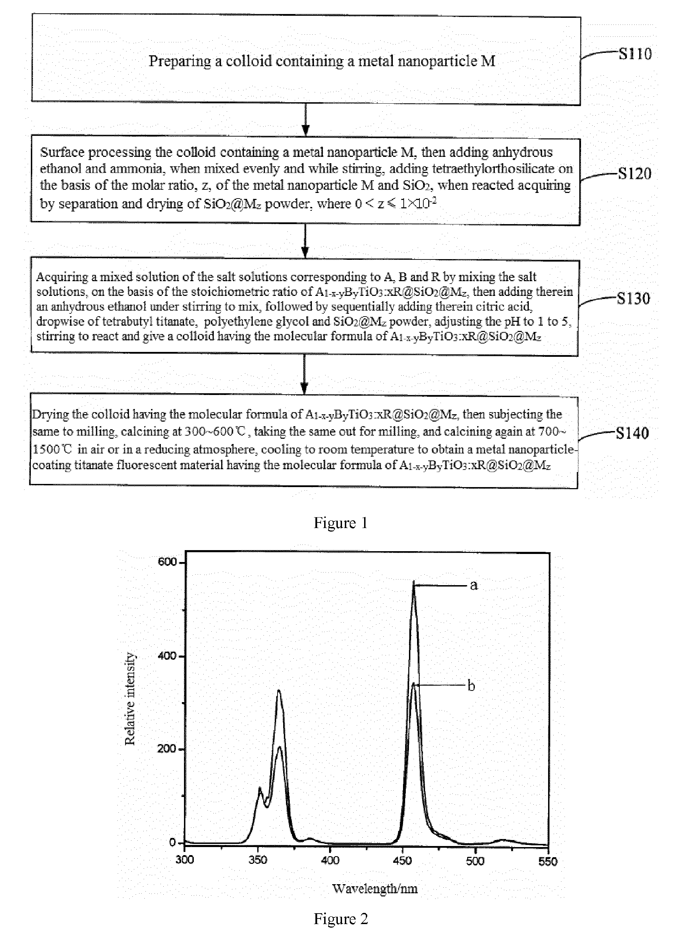

With reference to figure 1, a method of preparing a metal nanoparticle-coating titanate fluorescent material comprises the steps of:
Step S110: preparing a colloid containing a metal nanoparticle M.

Said metal nanoparticle M is one selected from Ag, Au, Pt, Pd and Cu nanoparticles.

Mixing a salt solution of metal nanoparticle M, an auxiliary agent and a reducing agent, when reacted to give a colloid containing a metal nanoparticle M.

On the premise that a colloid containing a metal nanoparticle M is guaranteed, to save energy, the reaction time of this step is preferably 10 min to 45min.

A salt solution of a metal nanoparticle M may be any soluble salts, for example, nitrate, hydrochloride, sulfate and the like. In the case of Ag and Pt, chloroauric acid (AuCl₃·HCl·4H₂O) and chloroplatinic acid (H₂PtCl₆·6H₂O) may be used.

The concentration of said salt solution of a metal nanoparticle M is 1×10⁻³mol/L to 5×10⁻²mol/L.

An auxiliary agent may be at least one among polyvinyl pyrrolidone, sodium citrate, cetyl trimethyl ammonium bromide, sodium lauryl sulfate and sodium dodecyl sulfate. The addition amount of an auxiliary agent in the resulting colloid containing a metal nanoparticle M is 1×10⁻⁴g/mL to 5×10⁻²g/mL.

A reducing agent may be at least one among hydrazine hydrate, ascorbic acid, sodium citrate and sodium borohydride. A reducing agent is generally mixed with a salt solution of a metal nanoparticle M after being formulated into a solution. A reducing agent may be formulated into or diluted to form an aqueous solution having a concentration of 1×10⁻⁴mol/L to 1mol/L. The molar ratio of the addition amount of a reducing agent and a metal nanoparticle M in said salt solution of a metal nanoparticle M is 3.6: 1 to 18: 1.

step S120: surface processing said colloid containing a metal nanoparticle M, then adding anhydrous ethanol and ammonia, when mixed evenly and while stirring, adding tetraethylorthosilicate on the basis of the molar ratio, z, of the metal nanoparticle M and SiO₂, when reacted acquiring by separation and drying of SiO₂@M_{z} powder, where 0 < z≤1×10⁻².

To facilitate the coating process, said colloid containing a metal nanoparticle M is firstly subjected to surface processing, which comprises adding said colloid containing a metal nanoparticle M into an aqueous solution of polyvinylpyrrolidone (PVP) while being stirred for 12h to 24h. The concentration of said aqueous solution of polyvinylpyrrolidone is preferably 0.01 to 0.05g/mL.

By means of StOber method, SiO₂@M_{z} nanospheres are formed by coating the metal nanoparticle M. Into the surface-processed colloid of the metal nanoparticle M is then added an anhydrous ethanol and ammonia, when mixed evenly and while stirring, tetraethylorthosilicate is added on the basis of the molar ratio, z, of the metal nanoparticle M and SiO₂, SiO₂@M_{z} nanospheres are obtained after being reacted for 3 to 12 h, which the SiO₂@M_{z} nanospheres are then separated by centrifugation, washed, and dried to give the SiO₂@M_{z} powder, where 0<z≤1×10⁻².

For better formation of the SiO₂@M_{z} nanospheres, an anhydrous ethanol, ammonia and tetraethylorthosilicate are mixed by volume ratio of 18∼30:3∼8:1∼1.5.

Step 130: acquiring a mixed solution of the salt solutions corresponding to A, B and R by mixing said salt solutions, on the basis of the stoichiometric ratio of A_{1-x-y}B_{y}TiO₃:xR@SiO₂@M_{z}, then adding therein an anhydrous ethanol under stirring to mix, followed by sequentially adding therein citric acid, dropwise of tetrabutyl titanate, polyethylene glycol and said SiO₂@M_{z} powder, adjusting the pH to 1 to 5, stirring to react and give a colloid having the molecular formula of A_{1-x-y}B_{y}TiO₃:xR@SiO₂@M_{z}, where A is one or two elements selected from Ca, Sr, Ba and Mg; B is one element selected from Li, Na and K; R is one or two elements selected from Eu, Gd, Tb, Tm, Sm, Ce, Dy and Mn, 0 <x≤0.40, 0≤y≤0.40.

Salt solutions corresponding to A, B and R may be nitrate solutions or acetate solutions corresponding to A, B and R. For example, a salt solution corresponding to A may be calcium nitrate Ca(NO₃)₂ solution or calcium acetate (CH₃COO)₂Ca•H₂O solution; a salt solution corresponding to B may be lithium nitrate (LiNO₃) or lithium acetate (CH₃COOLi); a salt solution corresponding to R may be europium nitrate (Eu(NO₃)_{3.}6H₂O) or acetic acid europium Eu(C₂H₃O₂)₃.

The ratio of the total volume of said mixed solution of said salt solutions corresponding to A, B and R and the volume of the anhydrous ethanol is preferably 1:1 to 1:10.

Citric acid is used as a chelating agent. The ratio of the molar amount of the citric acid and the total molar amount of said A, B and R is preferably 1:1 to 1:8.

As the polyethylene glycol, polyethylene glycol having an average molecular weight of 10,000 (i.e., PEG10000) is used. An appropriate amount of polyethylene glycol is added such that the concentration of polyethylene glycol is 0.005 to 1g/ml.

For better reaction to form a colloid of A_{1-x-y}B_{y}TiO₃:xR@SiO₂@M_{z}, the pH of the mixture of said salt solutions corresponding to A, B and R, an anhydrous ethanol, tetrabutyl titanate, polyethylene glycol and SiO₂@M_{z} powder is adjusted to 1 to 5 by slowly added therein a concentrated nitric acid of 65 % to 68% by mass percentage.
Step 140: drying the colloid having the molecular formula of A_{1-x-y}B_{y}TiO₃:xR@SiO₂@M_{z}, then subjecting the same to milling, calcining at 300 to 600°C, taking the same out for milling, and calcining again at 700 to 1500°C in air or in a reducing atmosphere, cooling to room temperature to obtain a metal nanoparticle-coating titanate fluorescent material having the molecular formula of A_{1-x-y}B_{y}TiO₃:xR@SiO₂@M_{z}.

Drying said colloid having the molecular formula of A_{1-x-y}B_{y}TiO₃:xR@SiO₂@M_{z} at 80 to 150 °C for 1 to 24 h, then calcining the same at 300 to 600 °C for 2h to 15h, taking the same out for milling, and calcining at 700 to 1500°C for 0.5 h to 8 h in air or in a weak reducing atmosphere, cooling to room temperature to obtain a metal nanoparticle-coating titanate fluorescent material having the molecular formula of A_{1-x-y}B_{y}TiO₃:xR@SiO₂@M_{z};
where A is one or two elements selected from Ca, Sr, Ba and Mg;
B is one element selected from Li, Na and K;
R is one or two elements selected from Eu, Gd, Tb, Tm, Sm, Ce, Dy and Mn;
M is one selected from Ag, Au, Pt, Pd and Cu nanoparticles;
0 < x≤0.40;
0≤y≤0.40;
0<z≤1×10⁻².

Said reducing atmosphere is one of a N₂ + H₂ mixed reducing atmosphere, carbon powder reducing atmosphere and pure H₂ reducing atmosphere.

The above-mentioned method of preparing the metal nanoparticle-coating titanate fluorescent material employing the sol-gel method for the preparation of metal nanoparticle-coating titanate fluorescent material is capable of solving the problem of uneven appearance existing in the fluorescent material prepared by the traditional high-temperature solid-phase method without conducting ball milling, and thus inhibits the problem of weakening the luminescent intensity of the fluorescent material caused by the defects thus generated and the impurities thus introduced during repeated milling, and results in the preparation of a metal nanoparticle-coating titanate fluorescent material having good stability, uniform particle size, higher luminescent intensity, which can be used in the field of displays and lighting.

In addition, the metal nanoparticle-coating titanate fluorescent material thus prepared has a higher bulk density, being resistant to bombardment, easy to screen-coating, easy to use.

The specific embodiment of the present invention will now be given as follows.

### Example 1

### Preparation of the Pt nanoparticle-coating Ca_{0.996}Li_{0.002}TiO₃:0.002Eu@SiO₂@Pt_{5×10-3}

### Preparation of a colloid containing the Pt nanoparticle:

51.8mg of chloroplatinic acid (H₂PtCl₆·6H₂O) was weighed and dissolved in 17mL of deionized water. After complete dissolution of chloroplatinic acid, 40.0mg of sodium citrate and 60.0mg of sodium dodecyl sulfate were weighed, and dissolved in an aqueous solution of chloroplatinic acid under magnetic stirring; 1.9 mg of sodium borohydride was weighed and dissolved in 10mL of deionized water to give 10 mL of an aqueous solution of sodium borohydride having a concentration of 5×10⁻³mol/L, while 10mL of a solution of hydrazine hydrate having a concentration of 5×10⁻²mol/L was prepared; under magnetic stirring, into the aqueous solution of chloroplatinic acid, 0.4 mL of the aqueous solution of sodium borohydride was firstly added dropwisely, and the same was allowed to react for 5 min, followed by added therein 2.6mL of the solution of hydrazine hydrate (5 × 10⁻²mol/L), and the same was allowed to react for further 40min, to give 10mL of a colloid containing the Pt nanoparticle having the Pt content of 5×10⁻³mol/L.

### Preparation of SiO₂@Pt_{5×10-3}:

At room temperature, 0.30g of PVP was weighed and dissolved in 6mL of deionized water. After dissolution, 4mL of the colloid containing the Pt nanoparticle (5 × 10⁻³mol/L) was added, and the same was stirred for 18h, followed by sequentially added therein 18mL of an anhydrous ethanol, 3mL of ammonia, 1.0mL of tetraethylorthosilicate under stirring, and the same was allowed to react for 5h, subjected to centrifugation, washing, drying to give spherical SiO₂@Pt_{5×10-3} powder.

### Preparation of Ca_{0.996}Li_{0.002}TiO₃:0.002Eu@SiO₂@Pt_{5×10-3}:

According to the stoichiometric ratio of Ca_{0.996}Li_{0.002}LiO₃:0.002Eu@SiO₂@Pt_{5×10-3}, 3.98ml of Ca(NO₃)₂ solution (1mol/L), 0.8ml of LiNO₃ solution (0.01mol/L) and 0.8ml of Eu(NO₃)₃ solution (0.01mol/L) were weighed, followed by added therein 5.56ml of an anhydrous ethanol to mix, stir and dissolve. 0.7686g of citric acid (being the chelating agent) was weighed and added into the above solution under stirring to dissolve. Then, under stirring, 1.42ml of tetrabutyl titanate (Ti(OC₄H₉)₄, chemical pure, in an amount of greater than 98%) was firstly added dropwisely, followed by addition of 12.54g of polyethylene glycol (PEG) having an average molecular weight of 10000 and SiO₂@Pt_{5×10-3} powder. Finally, into the same was slowly added a small amount of 65% to 68% concentrated nitric acid under stirring, by which the pH was adjusted and controlled to 1, and gradually resulted in the formation of a colloid having a molecular formula of Ca_{0.996}Li_{0.002}TiO₃:0.002Eu@SiO₂@Pt_{5×10-3}. The colloid was dried in an oven at 80°C for 24h to obtain a dry gel. The dried gel was then milled, calcined at 600°C for 2h, the same was then taken out for milling, calcined in a tubular furnace at 700°C in an air atmosphere for 8h, and then cooled down to room temperature in the oven, to obtain the Pt nanoparticle-coating Ca_{0.996}Li_{0.002}TiO₃:0.002Eu@SiO₂@Pt fluorescent material.

### [Example 2

### Preparation of the Ag nanoparticle-coating Sr_{0.8}TiO₃:0.2Eu@SiO₂@Ag_{1.25×10-4}

### Preparation of a colloid containing Ag nanoparticle:

3.4mg of silver nitrate (AgNO₃) was weighed and dissolved in 18.4 mL of deionized water; after complete dissolution of silver nitrate, 42mg of sodium citrate was weighed, and dissolved in an aqueous solution of silver nitrate under magnetic stirring; 5.7mg of sodium borohydride was weighed and dissolved in 10mL of deionized water to give 10 mL of an aqueous solution of sodium borohydride having a concentration of 1.5 × 10⁻²mol/L; under magnetic stirring, 1.6mL of the aqueous solution of sodium borohydride (1.5 × 10⁻²mol/L) was added all at once into the aqueous solution of silver nitrate, the same was then reacted for further 10min, to give 20mL of a colloid containing the Ag nanoparticle having the Ag content of 1 × 10⁻³mol/L.

### Preparation of a colloid of SiO₂@Ag_{1.35×10-4}:

At room temperature, 0.1g of PVP was weighed and dissolved in 9.5mL of deionized water. After dissolution, 0.5mL of Ag nanoparticle (1 × 10⁻³mol/L) was added, and the same was stirred for 12h, followed by sequentially added therein 25mL of an anhydrous ethanol, 6mL of ammonia, 1.0mL of tetraethylorthosilicate under stirring, and the same was allowed to react for 6h, subjected to centrifugation, washing, drying to give spherical SiO₂@Ag_{1.25×10-4} powder.

### Preparation of Sr_{0.8}TiO₃:0.2Eu@SiO₂@Ag_{1.25×10-4}:

According to the stoichiometric ratio of Sr_{0.8}TiO₃:0.2Eu@SiO₂@Ag_{1.25×10-4}, 3.2ml of Sr(NO₃)₂ solution (1mol/L) and 1.6ml of Eu(NO₃)₃ solution (0.5mol/L) were weighed, followed by added therein 48ml of an anhydrous ethanol to mix, stir and dissolve. 6.1488g of citric acid (being the chelating agent) was weighed and added into the above solution under stirring to dissolve. Then, under stirring, 1.42ml of tetrabutyl titanate (Ti(OC₄H₉)₄, chemical pure, in an amount of greater than 98%) was firstly added dropwisely, followed by addition of 0.2711g of polyethylene glycol (PEG) having an average molecular weight of 10000 and SiO₂@Ag_{1.25×10-4} powder. Finally, into the same was slowly added a small amount of 65% to 68% concentrated nitric acid under stirring, by which the pH was adjusted and controlled to 5, and gradually resulted in the formation of a colloid. The colloid was dried in an oven at 150°C for 1h to obtain a dry gel. The dried gel was then milled, calcined at 300°C for 15h, the same was then taken out for milling, calcined in a tubular furnace at 1500°C in a 95%N₂+5%H₂ mixed reducing atmosphere for 0.5h, and then cooled down to room temperature in the oven, to obtain the Ag nanoparticle-coating Sr_{0.8}TiO₃:0. 2Eu@SiO₂@Ag_{1.25×10-4} fluorescent material.

### Example 3

### Preparation of the Au nanoparticle-coating Ba_{0.6}TiO₃:0.2Ce,0.2Mn@SiO₂@Au_{1×10-3}

### Preparation of the colloid containing the Au nanoparticle:

20.6mg of chloroauric acid (AuCl₃·HCl·4H₂O) was weighed and dissolved in 16.8 mL of deionized water; after complete dissolution of chloroauric acid, 14mg of sodium citrate and 6mg of cetyl trimethyl ammonium bromide were weighed, and dissolved in an aqueous solution of chloroauric acid under magnetic stirring; 1.9mg of sodium borohydride and 17.6mg of ascorbic acid were respectively, weighed and dissolved in 10mL of deionized water to give 10 mL of an aqueous solution of sodium borohydride having a concentration of 5 × 10⁻³mol/L and 10 mL of an aqueous solution of ascorbic acid having a concentration of 1 × 10⁻²mol/L; under magnetic stirring, into the aqueous solution of chloroauric acid, 0.08mL of the aqueous solution of sodium borohydride was firstly added, and the same was allowed to react for 5 min, followed by added therein 3.122mL of the aqueous solution of ascorbic acid (1 × 10⁻²mol/L), and the same was allowed to react for further 30min, to give 20mL of a colloid containing the Au nanoparticle having the Au content of 5×10⁻³mol/L.

### Preparation of SiO₂@Au_{1×10-3}:

At room temperature, 0.18g of PVP was weighed and dissolved in 9mL of deionized water. After dissolution, 1 mL of Au nanoparticle (5 × 10⁻³mol/L) was added, and the same was stirred for 24h, followed by sequentially added therein 20mL of an anhydrous ethanol, 5mL of ammonia, 1.2mL of tetraethylorthosilicate under stirring, and the same was allowed to react for 3h, subjected to centrifugation, washing, drying to give spherical SiO₂@Au_{1×10-3} powder.

### Preparation of Ba_{0.6}TiO₃:0.2Ce,0.2Mn@SiO₂@Au_{1×10-3}:

According to the stoichiometric ratio of Ba_{0.6}TiO3:0.2Ce,0.2Mn@SiO₂@Au_{1 ×10-3}, 2.4ml of Ba(NO₃)₂ solution (1mol/L), 0.8ml of Ce(NO₃)₃ solution (1mol/L) and 0.8ml of Mn(CH₃COO)₂ solution (1mol/L) were weighed, followed by added therein 24ml of an anhydrous ethanol to mix, stir and dissolve. 4.6116g of citric acid (being the chelating agent) was weighed and added into the above solution under stirring to dissolve. Then, under stirring, 1.42ml of tetrabutyl titanate (Ti(OC₄H₉)₄, chemical pure, in an amount of greater than 98%) was firstly dropwisely added, followed by addition of 0.2942g of polyethylene glycol (PEG) having an average molecular weight of 10000 and SiO₂@Au_{1×10-3} powder. Finally, into the same was slowly added a small amount of 65% to 68% concentrated nitric acid under stirring, by which the pH was adjusted and controlled to 2, and gradually resulted in the formation of a colloid. The colloid was dried in an oven at 100°C for 24h to obtain a dry gel. The dried gel was then milled, calcined at 400°C for 6h, the same was then taken out for milling, calcined in a tubular furnace at 800°C in a 95%N₂+5%H₂ mixed reducing atmosphere for 4h, and then cooled down to room temperature in the oven, to obtain the Au nanoparticle-coating Ba_{0.6}TiO₃:0.2Ce,0.2Mn@SiO₂@Au_{1×10-3} fluorescent material.

### Example 4

### Preparation of the Pd nanoparticle-coating Ca_{0.6}Na_{0.2}TiO₃:0.15Gd,0.05Tb@SiO₂@Pd_{1×10-2}

### Preparation of the colloid containing the Pd nanoparticle:

35.2mg of palladium chloride (PdCl₂·2H₂O) was weighed and dissolved in 19 mL of deionized water; after complete dissolution of palladium chloride, 11.0 mg of sodium citrate and 4.0mg of sodium lauryl sulfate were weighed, and dissolved in an aqueous solution of palladium chloride under magnetic stirring; 3.8 mg of sodium borohydride was weighed and dissolved in 10mL of deionized water to give a reducing solution of sodium borohydride having a concentration of 1 × 10⁻²mol/L; under magnetic stirring, into the aqueous solution of palladium chloride was rapidly added 1mL of the aqueous solution of sodium borohydride (1×10⁻²mol/L), and the same was reacted for further 20min, to give 20mL of a colloid containing the Pd nanoparticle having the Pd content of 8×10⁻³mol/L.

### Preparation of SiO_{2@}Pd_{1×10-2}:

At room temperature, 0.20g of PVP was weighed and dissolved in 5mL of deionized water. After dissolution, 5 mL of Pd nanoparticle (8 × 10⁻³mol/L) was added, and the same was stirred for 12h, followed by sequentially added therein 25mL of an anhydrous ethanol, 4mL of ammonia, 1.5mL of tetraethylorthosilicate under stirring, and the same was allowed to react for 8h, subjected to centrifugation, washing, drying to give spherical SiO₂@Pd_{1×10-2} powder.

### Preparation of Ca_{0.6}Na_{0.2}TiO₃:0.15Gd,0.05Tb@SiO₂@Pd_{1×10-2}:

According to the stoichiometric ratio of Ca_{0.6}Na_{0.2}TiO₃:0.15Gd,0.05Tb@SiO₂@Pd_{1×10-2}, 2.4ml of Ca(NO₃)₂ solution (1mol/L), 0.8ml of NaNO₃ solution (1mol/L), 3ml of Gd(NO₃)₃ solution (0.2mol/L) and 0.4ml of Tb(NO₃)₃ solution (0.5mol/L) were weighed, followed by added therein 33ml of an anhydrous ethanol to mix, stir and dissolve. 3.0744g of citric acid (being the chelating agent) was weighed and added into the above solution under stirring to dissolve. Then, under stirring, 1.42ml of tetrabutyl titanate (Ti(OC₄H₉)₄, chemical pure, in an amount of greater than 98%) was firstly added dropwisely, followed by addition of 0.5g of polyethylene glycol (PEG) having an average molecular weight of 10000 and SiO₂@Pd_{1×10-2} powder. Finally, into the same was slowly added a small amount of 65% to 68% concentrated nitric acid under stirring, by which the pH was adjusted and controlled to 1, and gradually resulted in the formation of a colloid. The colloid was dried in an oven at 80°C for 24h to obtain a dry gel. The dried gel was then milled, calcined at 500°C for 4h, the same was then taken out for milling, calcined in a tubular furnace at 750°C in a pure H₂ reducing atmosphere for 8h, and then cooled down to room temperature in the oven, to obtain the Pd nanoparticle-coating Ca_{0.6}Na_{0.2}TiO₃:0.15Gd,0.05Tb@SiO₂@Pd_{1×10-2} fluorescent material.

### Example 5

### Preparation of the Ag nanoparticle-coating Mg_{0.9}K_{0.05}TiO₃:0.05Dy@SiO₂@Ag_{1×10-5}

### Preparation of the colloid containing the Ag nanoparticle:

0.0215 g of AgNO₃, 0.0733 g of sodium citrate, 0.05g of PVP were respectively weighed and formulated into 10mL of an aqueous solution of AgNO₃ (0.025 mol/L), 10mL of an aqueous solution of sodium citrate (0.025 mol/L) and 10mL of an aqueous solution of PVP (5mg/mL). 2mL of the aqueous solution of AgNO₃ was added into 30mL of deionized water, followed by added therein 4 ml of the above aqueous solution of PVP, and the same was heated to 100°C, and then added dropwisely therein 4mL of the aqueous solution of sodium citrate, the mixture was allowed to react for 15min to obtain 40mL of a colloid containing the Ag nanoparticle having the Ag content of 5 × 10⁻⁴mol/L.

### Preparation of SiO₂@Ag_{1×10-5}:

At room temperature, 0.08g of PVP was weighed and dissolved in 5mL of deionized water. After dissolution, 8 mL of Ag nanoparticle (5 × 10⁻⁴mol/L) was added, and the same was stirred for 18h, followed by sequentially added therein 30mL of an anhydrous ethanol, 8mL of ammonia, 1.5mL of tetraethylorthosilicate under stirring, and the same was allowed to react for 10h, subjected to centrifugation, washing, drying to give spherical SiO₂@Ag_{1×10-5} powder.

### Preparation of Mg_{0.9}K_{0.05}TiO₃:0.05Dy@SiO₂@Ag_{1×10-5}:

According to the stoichiometric ratio of Mg_{0.9}K_{0.05}TiO₃:0.05Dy@SiO₂@Ag_{1 ×10-5}, 3.6ml of Mg(NO₃)₂ solution (1mol/L), 1ml of KNO₃ solution (0.2mol/L) and 1ml of Dy(NO₃)₃ solution (0.2mol/L) were weighed, followed by added therein 22.4ml of an anhydrous ethanol to mix, stir and dissolve. 3.8445g of citric acid (being the chelating agent) was weighed and added into the above solution under stirring to dissolve. Then, under stirring, 1.42ml of tetrabutyl titanate (Ti(OC₄H₉)₄, chemical pure, in an amount of greater than 98%) was firstly added dropwisely, followed by addition of 2.1456g of polyethylene glycol (PEG) having an average molecular weight of 10000 and SiO₂@Ag_{1×10-5} powder. Finally, into the same was slowly added a small amount of 65% to 68% concentrated nitric acid under stirring, by which the pH was adjusted and controlled to 3, and gradually resulted in the formation of a colloid. The colloid was dried in an oven at 80°C for 24h to obtain a dry gel. The dried gel was then milled, calcined at 500°C for 7h, the same was then taken out for milling, calcined in a tubular furnace at 900°C in an air atmosphere for 3h, and then cooled down to room temperature in the oven, to obtain the Ag nanoparticle-coating Mg_{0.9}K_{0.05}TiO₃:0.05Dy@SiO₂@Ag_{1×10-5} fluorescent material.

### Example 6

### Preparation of the Cu nanoparticle-coating Ca_{0.8}Mg_{0.18}Na_{0.01}TiO₃:0.01Tm@SiO₂@Cu_{8×10-3}

### Preparation of the colloid containing the Cu nanoparticle:

32 mg of copper nitrate was weighed and dissolved in 16 mL of ethanol; after complete dissolution of copper nitrate, 12 mg of PVP was added while stirring, and then added dropwisely therein 4mL of an ethanol solution of sodium borohydride (1 × 10⁻³mol/L) prepared by dissolving 0.4 mg of sodium borohydride in 10mL of ethanol, and the same was allowed to react for further 10min, to give 20mL of a colloid containing the Cu nanoparticle having the Cu content of 8×10⁻³mol/L.

### Preparation of SiO₂@Cu_{8×10-3}:

At room temperature, 0.15g of PVP was weighed and dissolved in 6mL of deionized water. After dissolution, 4 mL of Cu nanoparticle (8 × 10⁻³mol/L) was added, and the same was stirred for 24h, followed by sequentially added therein 20mL of an anhydrous ethanol, 5mL of ammonia, 1.2mL of tetraethylorthosilicate under stirring, and the same was allowed to react for 4h, subjected to centrifugation, washing, drying to give spherical SiO₂@Cu_{8×10-3} powder.

### Preparation of Ca_{0.8}Mg_{0.18}Na_{0.01}TiO₃:0.01Tm@SiO₂@Cu_{8×10-3}:

According to the stoichiometric ratio of Ca_{0.8}Mg_{0.18}Na_{0.01}TiO₃:0.01Tm@SiO₂@Cu_{8×10-3}, 3.2ml of Ca(NO₃)₂ solution (1mol/L), 3.6ml of Mg(NO₃)₂ solution (0.2mol/L), 4ml of NaNO₃ solution (0.01mol/L) and 0.8ml of Tm(NO₃)₃ solution (0.05mol/L) were weighed, followed by added therein 23.2ml of an anhydrous ethanol to mix, stir and dissolve. 5.3802g of citric acid (being the chelating agent) was weighed and added into the above solution under stirring to dissolve. Then, under stirring, 1.42ml of tetrabutyl titanate (Ti(OC₄H₉)₄, chemical pure, in an amount of greater than 98%) was firstly added dropwisely, followed by addition of 2.2566g of polyethylene glycol (PE) having an average molecular weight of 10000 and SiO₂@Cu_{8×10-3} powder. Finally, into the same was slowly added a small amount of 65% to 68% concentrated nitric acid under stirring, by which the pH was adjusted and controlled to 1, and gradually resulted in the formation of a colloid. The colloid was dried in an oven at 90°C for 24h to obtain a dry gel. The dried gel was then milled, calcined at 500 °C for 3h, the same was then taken out for milling, calcined in a tubular furnace at 800°C in an air atmosphere for 3h, and then cooled down to room temperature in the oven, to obtain the Cu nanoparticle-coating Ca_{0.8}Mg_{0.18}Na_{0.01}TiO₃:0.01Tm@SiO₂@Cu_{8×10-3} fluorescent material.

### Example 7

### Preparation of the Ag nanoparticle-coating Ca_{0.95}TiO₃:0.05Sm@SiO₂@Ag_{1× 10-5}

### Preparation of the colloid containing the Ag nanoparticle:

0.0215 g of AgNO₃, 0.0733 g of sodium citrate, 0.05g of PVP were respectively weighed and formulated into 10mL of an aqueous solution of AgNO₃ (0.025 mol/L), 10mL of an aqueous solution of sodium citrate (0.025 mol/L) and 10mL of an aqueous solution of PVP (5mg/mL). 2mL of the aqueous solution of AgNO₃ was added into 30mL of deionized water, while 4 ml of the above aqueous solution of PVP was also added therein, and the same was heated to 100°C, and then added dropwisely therein 4mL of the aqueous solution of sodium citrate, the mixture was allowed to react for 15min to give 40mL of a colloid containing the Ag nanoparticle having the Ag content of 5 × 10⁻⁴mol/L.

### Preparation of SiO₂@Ag_{1×10-5}:

At room temperature, 0.08g of PVP was weighed and dissolved in 5mL of deionized water. After dissolution, 8 mL of Au nanoparticle (5 × 10⁻³mol/L) was added, and the same was stirred for 18h, followed by sequentially added therein 30mL of an anhydrous ethanol, 8mL of ammonia, 1.5mL of tetraethylorthosilicate under stirring, and the same was allowed to react for 10h, subjected to centrifugation, washing, drying to give spherical SiO₂@Ag_{1×10-5} powder.

### Preparation of Ca₀.₉₅TiO₃:0.05Sm@SiO₂@Ag_{1×10-5}:

According to the stoichiometric ratio of Ca_{0.95}TiO₃:0.05Sm@SiO₂@Ag, 3.8ml of Ca(NO₃)₂ solution (1mol/L) and 1ml of Sm(NO₃)₃ solution (0.2mol/L) were weighed, followed by added therein 20ml of an anhydrous ethanol to mix, stir and dissolve. 3.0744g of citric acid (being the chelating agent) was weighed and added into the above solution under stirring to dissolve. Then, under stirring, 1.42ml of tetrabutyl titanate (Ti(OC₄H₉)₄, chemical pure, in an amount of greater than 98%) was firstly added dropwisely, followed by addition of 1.5g of polyethylene glycol (PEG) having an average molecular weight of 10000 and SiO₂@Ag_{1×10-5} powder. Finally, into the same was slowly added a small amount of 65% to 68% concentrated nitric acid under stirring, by which the pH was adjusted and controlled to 1, and gradually resulted in the formation of a colloid. The colloid was dried in an oven at 120°C for 24h to obtain a dry gel. The dried gel was then milled, calcined at 500°C for 4h, the same was then taken out for milling, calcined in a tubular furnace at 850°C in a carbon powder atmosphere for 8h, and then cooled down to room temperature in the oven, to obtain the Ag nanoparticle-coating Ca_{0.95}TiO₃:0.05Sm@SiO₂@Ag_{1×10-5} fluorescent material.

### Example 8

### Preparation of the Ag nanoparticle-coating Sr_{0.98}TiO₃:0.02Tm@SiO₂@Ag_{1.25 ×10-4}

### Preparation of the colloid containing the Ag nanoparticle:

3.4mg of silver nitrate (AgNO₃) was weighed and dissolved in 18.4 mL of deionized water; after complete dissolution of silver nitrate, 42 mg of sodium citrate was weighed, and dissolved in an aqueous solution of silver nitrate under magnetic stirring; 5.7mg of sodium borohydride was weighed and dissolved in 10mL of deionized water to give 10mL of an aqueous solution of sodium borohydride having a concentration of 1.5 × 10⁻²mol/L; under magnetic stirring, into the aqueous solution of silver nitrate was added all at once 1.6mL of the aqueous solution of sodium borohydride (1.5 × 10⁻²mol/L), and the same was allowed to react for further 10min, to give 20mL of a colloid containing the Ag nanoparticle having the Ag content of 1 × 10⁻³mol/L.

### Preparation of SiO₂@Ag_{1.25×10-4}:

At room temperature, 0.1g of PVP was weighed and dissolved in 9.5mL of deionized water. After dissolution, 0.5mL of Ag nanoparticle (1 × 10⁻³mol/L) was added, and the same was stirred for 12h, followed by sequentially added therein 25mL of an anhydrous ethanol, 6mL of ammonia, 1.0mL of tetraethylorthosilicate under stirring, and the same was allowed to react for 6h, subjected to centrifugation, washing, drying to give spherical SiO₂@Ag_{1.25×10-4} powder.

### Preparation of Sr_{0.98}TiO₃:0.02Tm@SiO₂@Ag_{1.25×10-4}:

According to the stoichiometric ratio of Sr_{0.98}TiO₃:0.02Tm@SiO₂@Ag_{1.25× 10-4}, 3.92ml of Sr(NO₃)₂ solution (1mol/L) and 2ml of Tm(NO₃)₃ solution (0.04mol/L) were weighed, followed by added therein 25ml of an anhydrous ethanol to mix, stir and dissolve. 3.2544 of citric acid (being the chelating agent) was weighed and added into the above solution under stirring to dissolve. Then, under stirring, 1.42ml of tetrabutyl titanate (Ti(OC₄H₉)₄, chemical pure, in an amount of greater than 98%) was firstly added dropwisely, followed by addition of 1.0g of polyethylene glycol (PEG) having an average molecular weight of 10000 and SiO₂@Ag_{1.25×10-4} powder. Finally, into the same was slowly added a small amount of 65% to 68% concentrated nitric acid under stirring, by which the pH was adjusted and controlled to 1, and gradually resulted in the formation of a colloid. The colloid was dried in an oven at 100°C for 15h to obtain a dry gel. The dried gel was then milled, calcined at 500°C for 4h, the same was then taken out for milling, calcined in a tubular furnace at 850°C in an air atmosphere for 5h, and then cooled down to room temperature in the oven, to obtain the Ag nanoparticle-coating Sr_{0.98}TiO₃:0.02Tm@SiO₂@Ag_{1.25×10-4} fluorescent material.

Sr_{0.98}TiO₃:0.02Tm@SiO₂ fluorescent material was prepared in the same manner as above.

In figure 2, curves a and b, respectively, refer to the luminescent spectrum of the Sr_{0.98}TiO₃:0.02Tm@SiO₂@Ag_{1.25×10-4} fluorescent material prepared in Example 8, and the luminescent spectrum of the Sr_{0.98}TiO₃:0.02Tm@SiO₂ fluorescent material, being excited with an electron beam at 3 kV. According to figure 2, as comparing with Sr_{0.98}TiO₃:0.02Tm@SiO₂ fluorescent material, the Sr_{0.98}TiO₃:0.02Tm@SiO₂@Ag_{1.5×10-4} fluorescent material prepared in Example 8 has a higher luminescent intensity, which the intensity is increased by 60%.

Although the preferable embodiments of the present invention has been described and illustrated in detail, it is clearly understood that the same is not to be taken by way of limitation, it should be understood that various changes, substitutions, and alterations could be made hereto by an ordinary skilled person in the art without departing from the spirit and scope of the invention as defined by the appended claims.

## Claims

1. A metal nanoparticle-coating titanate fluorescent material, **characterized in that** having the molecular formula of A_{1-x-y}B_{y}TiO₃:xR@SiO₂@M_{z},
where A is one or two elements selected from Ca, Sr, Ba and Mg;
B is one element selected from Li, Na and K;
R is one or two elements selected from Eu, Gd, Tb, Tm, Sm, Ce, Dy and Mn; M is one selected from Ag, Au, Pt, Pd and Cu nanoparticles;
0 < x≤0.40;
0≤y≤0.40;
z is the molar ratio of M and SiO₂, where 0 < z≤1× 10⁻²;
@ represents a coating, M is a core, SiO₂ is an intermediate layer shell, and A_{1-x-y}B_{y}TiO₃:xR is an outer layer shell.

2. A metal nanoparticle-coating titanate fluorescent material according to claim 1, **characterized in that**, 0.002≤x≤0.2.

3. A metal nanoparticle-coating titanate fluorescent material according to claim 1, **characterized in that**, 0.002≤y≤0.2.

4. A metal nanoparticle-coating titanate fluorescent material according to claim 1, **characterized in that**, 1 × 10⁻⁵≤z≤5×10⁻³.

5. A method of preparing a metal nanoparticle-coating titanate fluorescent material, **characterized in that** comprising the steps of:
step 1: preparing a colloid containing a metal nanoparticle M, said metal nanoparticle M is one selected from Ag, Au, Pt, Pd and Cu nanoparticles;
step 2: surface processing said colloid containing a metal nanoparticle M, then adding anhydrous ethanol and ammonia, when mixed evenly and while stirring, adding tetraethylorthosilicate on the basis of the molar ratio, z, of the metal nanoparticle M and SiO₂, when reacted acquiring by separation and drying of SiO₂@M_{z} powder, where 0 < z≤1×10⁻²;
step 3: acquiring a mixed solution of the salt solutions corresponding to A, B and R by mixing said salt solutions, on the basis of the stoichiometric ratio of A_{1-x-y}B_{y}TiO₃:xR@SiO₂@M_{z}, then adding therein an anhydrous ethanol under stirring to mix, followed by sequentially adding therein citric acid, dropwise of tetrabutyl titanate, polyethylene glycol and said SiO₂@M_{z} powder, adjusting the pH to 1 to 5, stirring to react and give a colloid having the molecular formula of A_{1-x-y}B_{y}TiO₃:xR@SiO₂@M_{z}, where A is one or two elements selected from Ca, Sr, Ba and Mg; B is one element selected from Li, Na and K; R is one or two elements selected from Eu, Gd, Tb, Tm, Sm, Ce, Dy and Mn; 0 < x≤0.40; 0≤y≤0.40; 0<z≤1×10⁻²;
step 4: drying the colloid having the molecular formula of A_{1-x-y}B_{y}TiO₃:xR@SiO₂@M_{z}, then subjecting the same to milling, calcining at 300 to 600°C, taking the same out for milling, and calcining again at 700 to 1500°C in air or in a reducing atmosphere, cooling to room temperature to obtain a metal nanoparticle-coating titanate fluorescent material having the molecular formula of A_{1-x-y}B_{y}TiO₃:xR@SiO₂@M_{z}.

6. A method of preparing a metal nanoparticle-coating titanate fluorescent material according to claim 5, **characterized in that** said step 1 of preparing a colloid containing a metal nanoparticle M comprises mixing a salt solution of a metal nanoparticle M, an auxiliary agent and a reducing agent for a reaction time of 10 min to 45 min to obtain a colloid containing a metal nanoparticle M;
where, the concentration of said salt solution of a metal nanoparticle M is 1×10⁻³mol/L to 5 ×10⁻²mol/L;
said auxiliary agent is at least one of polyvinylpyrrolidone, sodium citrate, cetyl trimethyl ammonium bromide, sodium lauryl sulfate and sodium dodecyl sulfate;
said auxiliary agent is present in an amount of 1 × 10⁻⁴g/mL to 5×10⁻²g/mL in said colloid containing a metal nanoparticle M;
said reducing agent is at least one of hydrazine hydrate, ascorbic acid, sodium citrate and sodium borohydride;
the molar ratio of said reducing agent and the metal nanoparticle M in said salt solution of said metal nanoparticle M is 3.6: 1 to 18: 1.

7. A method of preparing a metal nanoparticle-coating titanate fluorescent material according to claim 5, **characterized in that** said step 2 of surface processing said colloid containing a metal nanoparticle M comprises adding said colloid containing a metal nanoparticle into an aqueous solution of polyvinylpyrrolidone while being stirred for 12h to 24h, where the concentration of said aqueous solution of polyvinylpyrrolidone is 0.01 to 0.05 g/ml.

8. A method of preparing a metal nanoparticle-coating titanate fluorescent material according to claim 5, **characterized in that** in said step 3, the ratio of the total volume of said mixed solution of said salt solutions corresponding to A, B and R and the volume of the anhydrous ethanol is 1:1 to 1:10, the ratio of the molar amount of the citric acid and the total molar amount of said A, B and R is 1:1 to 1:8, the concentration of the polyethylene glycol is 0.005 to 1g/ml, the pH of the mixture of said salt solutions corresponding to A, B and R, an anhydrous ethanol, tetrabutyl titanate, polyethylene glycol and SiO₂@M_{z} powder is adjusted to 1 to 5 using a concentrated nitric acid of 65 % to 68% by mass percentage.

9. A method of preparing a metal nanoparticle-coating titanate fluorescent material according to claim 5, **characterized in that** in said step 4, said reducing atmosphere is one of a N₂ + H₂ mixed reducing atmosphere, carbon powder reducing atmosphere and pure H₂ reducing atmosphere.

10. A method of preparing a metal nanoparticle-coating titanate fluorescent material according to claim 5, **characterized in that** in said step 4, drying is conducted at 80 to 150 °C for 1 to 24 h, calcining at 300 to 600 °C is conducted for 2h to 15h, and calcining at 700 to 1500 °C is conducted for 0.5 h to 8 h.
